# EUROPÄISCHE PATENTANMELDUNG

(11) **EP 3 792 607 A1**
(43) Veröffentlichungstag der Anmeldung: **17.03.2021**
(21) Anmeldenummer: 20194531.8
(22) Anmeldetag: 04.09.2020
(51) Int. Cl.: G01K 1/08, G01K 1/14, G01K 13/02

(54) **ADAPTER FÜR EINEN SENSOR FÜR EIN HEIZGERÄT, SENSOR-ADAPTER-EINHEIT SOWIE HEIZGERÄT MIT EINEM SOLCHEN ADAPTER**

(30) Priorität: 11.09.2019 DE 102019213804
(71) Anmelder: Robert Bosch GmbH, 70442 Stuttgart (DE)
(72) Erfinder: Schoenmaker, Bart Cornelis, 8084 AR't Harde (NL); Steen van der, Peter, 7424 EG Deventer (NL)

(57) **Zusammenfassung**

Die Erfindung betrifft einen Adapter (10) für einen Sensor (12) für ein Heizgerät (14). Der Adapter zeichnet aus durch einen Körper (16), der eine erste Aufnahme (18) für einen Sensor (12) aufweist, der eine zweite Aufnahme (20) für ein Gehäuse (66) eines Heizgeräts (14) aufweist und der einen in das Heizgerät (14) einbringbaren sensitiven Fortsatz (22) aufweist. Die Erfindung betrifft auch eine Sensor-Adapter-Einheit mit einem Sensor (12) und einem solchen Adapter (10) und ein Heizgerät mit einem solchen Adapter (10).

## Beschreibung

Die Erfindung betrifft einen Adapter für einen Sensor für ein Heizgerät. Solche Sensoren werden verwendet um beispielsweise die Temperatur eines Abgases eines Heizgerätes zu bestimmen. Ein solcher Sensor ist beispielsweise aus der DE 102015009539A1 bekannt.

### Vorteile der Erfindung

Erfindungsgemäß wird für solch einen Sensor ein Adapter bereitgestellt, der gekennzeichnet ist durch einen Körper, der eine erste Aufnahme für einen Sensor aufweist, der eine zweite Aufnahme für ein Gehäuse eines Heizgeräts aufweist und der einen in das Heizgerät einbringbaren sensitiven Fortsatz aufweist. Dadurch ist erreicht, dass ein beliebiger Sensor verwendet werden kann, ohne hierbei auf die Einflüsse der zu messenden Substanz Rücksicht nehmen zu müssen. Dies ist insbesondere bei Heizgasen ein großer Vorteil, da diese eine aggressive Umgebung erzeugen, die nur bestimmte Sensortypen zulässt.

Als Sensoren kommen in erster Linie Temperatursensoren oder auch sogenannte Temperaturlimiter zur Anwendung. Bei diesen Sensoren unterscheidet man solche die in nasser Umgebung agieren und solche, die eine trockene Umgebung benötigen. Sensoren für nasse Umgebungen weisen in der Regel eine kürzere Ansprechzeit auf als Sensoren für trockene Umgebungen, können aber in einer aggressiven Umgebung nicht eingesetzt werden. Die Auswahl eines Sensors ist damit regelmäßig ein Kompromiss.

Durch den erfindungsgemäßen Adapter, der einen Körper mit einer Aufnahme für den Sensor aufweist sowie einen sensitiven Fortsatz ist es möglich, auch Sensoren für nasse Umgebungen einzusetzen. Der Sensor wird in der Aufnahme des Adapters platziert und sensiert über die Außenfläche des sensitiven Fortsatzes beispielsweise die Temperatur eines Abgases.

Der Adapter kann aus einem Edelstahl bestehen, der auf das zu messenden Medium und auf die zu messenden Größe optimiert ist. Für einen Temperatursensor wird ein Edelstahl eingesetzt, der zum einen eine gute Wärmeleitfähigkeit und zum anderen einen kleinen Wärmeübergangswiderstand an der Oberfläche aufweist. Ein solcher Adapter kann problemlos Sensoren aus Metall, beispielsweise Aluminium oder Messing aufnehmen. Außerdem lässt er sich sowohl in Gehäusen aus Kunststoff als auch aus Metall platzieren.

Durch die in den Unteransprüchen angegebenen Merkmale sind vorteilhafte Weiterbildungen des erfindungsgemäßen Adapters möglich. So ist eine einfache Montage eines Sensors möglich, wenn die erste Aufnahme ein Innengewinde aufweist. Ein Sensor lässt sich dadurch einfach Einschrauben und im Bedarfsfall ebenso einfach auswechseln.

Weist die zweite Aufnahme die Form einer umlaufenden Nut auf, lässt sich der Adapter einfach in einer Gehäusewand beispielsweise eines Heizgerätes oder eines Teils davon anordnen. Weist die zweite Aufnahme darüber hinaus eine Anlaufschräge auf, kann der Adapter in einfacher Weise eingerastet werden.

Die Befestigung des Adapters in einer Gehäusewand kann intensiviert werden, wenn die zweite Aufnahme zumindest einseitig eine verstellbare Wand aufweist. Dies ist beispielsweise durch eine Überwurfmutter oder dergleichen möglich.

Die sensitive Oberfläche relativ zum Bauraum des sensitiven Fortsatzes wird optimiert, wenn der sensitive Fortsatz zylinderförmige ist.

Eine Vergrößerung der sensitiven Oberfläche des sensitiven Fortsatzes wird ermöglicht, wenn der Fortsatz einen erweiterten Bereich aufweist. Dieser erweiterte Bereich kann in seiner Ausgestaltung den Strömungsverhältnissen im zu messenden Gebiet angepasst sein.

Weist der erfindungsgemäße Adapter einen Mehrkant auf, kann er sich an entsprechenden Anlagewänden des Gehäuses abstützen. Auf diese Weise sitzt der Adapter fest und verdrehsicher im Gehäuse. Ein Einschrauben eines Sensors wird dadurch erleichtert. Der Mehrkant kann insbesondere ein Sechskant sein, sodass gegebenenfalls auch ein Werkzeug eingesetzt werden kann um dem Ein- oder Ausschrauben eines Sensors einen Widerstand entgegenzusetzen.

Die Erfindung betrifft auch eine Sensor-Adapter-Einheit mit einem Sensor und einem erfindungsgemäßen Adapter. Diese Sensor-Adapter-Einheit zeichnet sich dadurch aus, dass der Sensor mit einem sensitiven Bereich in die erste Aufnahme des Adapters einführbar, insbesondere eindrehbar ist. Diese Einheit kann beispielsweise für ein Heizgerät bereitgestellt werden und dort herkömmliche Sensoren ersetzen.

Die Erfindung betrifft auch ein Heizgerät mit einem erfindungsgemäßen Adapter. Das Heizgerät zeichnet sich dadurch aus, dass der Adapter in einer Öffnung einer Gehäusewand befestigbar, insbesondere verdrehsicher befestigbar ist. Wird das Heizgerät bereits so vorbereitet, dass der Adapter bereits werkseitig eingebracht werden kann bzw. bereits montiert ist, lässt sich der Sensor während der Aufstellung des Heizgerätes sehr einfach montieren.

Für unterschiedliche Sensoren können erfindungsgemäße Adapter mit unterschiedlichen ersten Aufnahmen bereitgestellt werden.

### Zeichnung

In der Zeichnung sind Ausführungsbeispiele dargestellt und in der nachfolgenden Beschreibung näher erläutert. Es zeigen
Figur 1 einen erfindungsgemäßen Adapter teilweise im Schnitt
Figur 2 eine Draufsicht auf den erfindungsgemäßen Adapter nach Figur 1
Figur 3 einen weiteren erfindungsgemäßen Adapter
Figur 4 einen Teil eines Heizgerätes mit einer eingebauten Sensor-Adapter-Einheit

### Beschreibung

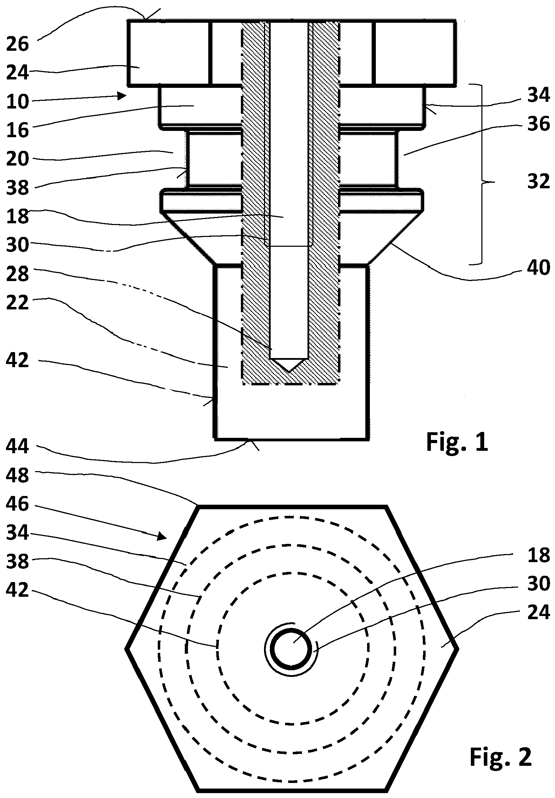

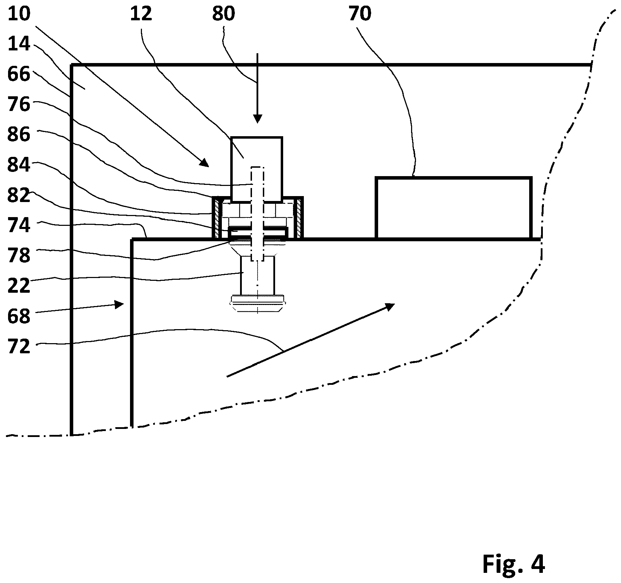

In der Figur 1 ist ein Adapter 10 für einen Sensor 12 für ein Heizgerät 14, wie sie in Figur 4 zu sehen sind, dargestellt. Der Adapter 10 besitzt einen Körper 16 mit einer ersten Aufnahme 18. Ferner ist eine zweite Aufnahme 20 vorgesehen. Außerdem weist der Körper 16 einen Fortsatz 22 auf.

Der Körper 16 ist im wesentlichen rund beziehungsweise zylinderförmig mit unterschiedlichen Durchmessern ausgeführt. Er besteht aus Edelstahl und kann als Drehteil hergestellt werden.

An einem Kopfteil 24 ist ausgehend von einer oberen Seite 26 die erste Aufnahme 18 eingebracht. Im Ausführungsbeispiel ist die erste Aufnahme 18 als Sacklochbohrung 28 ausgeführt. Die Sacklochbohrung 28 reicht von der oberen Seite 26 bis in den Fortsatz 22. Die Sacklochbohrung 28 ist ferner mit einem Innengewinde 30 versehen.

Der Körper 16 weist einen zylindrischen Teil 32 mit einem ersten Durchmesser 34 auf. Im zylindrischen Teil 32 ist die zweite Aufnahme in Form einer Nut 36 eingearbeitet. Die Nut 36 weist einen zweiten Durchmesser 38 auf, der kleiner ist als der erste Durchmesser 34.

Auf der, der oberen Seite 26 gegenüberliegenden Seite ist der zylindrische Teil 32 abgeschrägt, sodass die zweite Aufnahme 20 mit einer Anlaufschräge 40 versehen ist. Auf die Funktion der Anlaufschräge 40 wird später eingegangen.

An den zylindrischen Teil 32 schließt sich auf der dem Kopfteil 24 gegenüberliegenden Seite der Fortsatz 22 an. Der Fortsatz 22 weist einen dritten Durchmesser 42 auf, der kleiner ist als der zweite Durchmesser 38 der Nut 36. Der Fortsatz 22 ist als sensitiver Fortsatz 22 ausgebildet. Das heißt, Material, Form und Oberfläche sind so ausgebildet, dass sie die Umgebung um den Fortsatz 22 bestmöglich sensieren können. Abgeschlossen wird der Körper 16 bzw. der Fortsatz 22 durch eine untere Seite 44.

In Figur 2 ist erkennbar, dass das Kopfteil 24 an seiner äußeren Umrandung einen Mehrkant 46 aufweist. Im Ausführungsbeispiel ist der Mehrkant 46 als Sechskant 48 ausgeführt.

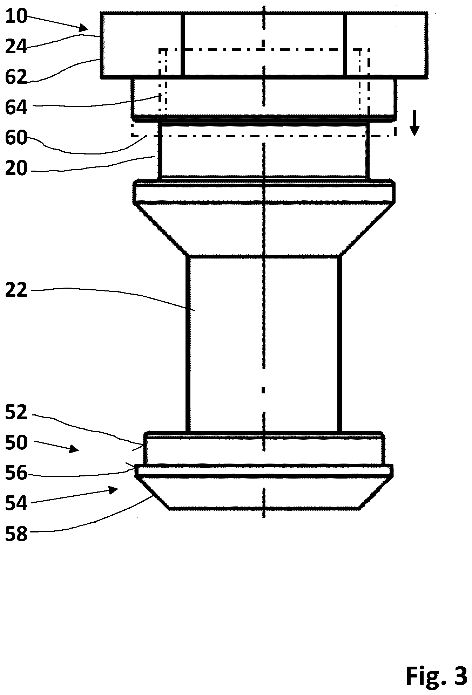

Die Ausführungsform des Adapter 10 gemäß Figur 3 unterscheidet sich von der Ausführungsform der Figur 1 dadurch, dass der Fortsatz 22 im Bereich der unteren Seite 44 einen erweiterten Bereich 50 aufweist. Dieser erweiterte Bereich 50 ist im Ausführungsbeispiel ebenfalls von zylindrische Form mit einem vierten Durchmesser 52. Der vierte Durchmesser 52 ist kleiner als der erste Durchmesser 34.

Der erweiterte Bereich 50 weist seinerseits im Bereich der unteren Seite 44 einen zylindrischen Dachbereich 54 auf, der einen fünften Durchmesser 56 hat. Der 5. Durchmesser ist von der Größe gleich dem ersten Durchmesser 34 des zylindrischen Teils 32. Der Dachbereich 54 ist mit einer weiteren Anlaufschräge 58 versehen.

In der Figur 3 ist als eine Alternative die zweite Aufnahme 20 mit einer verstellbaren Wand 60 ausgestattet (gestrichelt gezeichnet). Die Verstellbarkeit kann beispielsweise dadurch erreicht werden, dass der Kopfteil 24 als eine Art Überwurfmutter 62 ausgebildet ist, die sich auf einem Außengewinde 64 relativ zum zylindrischen Teil 32 durch Verdrehen des Kopfteils 24 axial verschieben lässt. In Figur 3 ist dies schematisch dargestellt.

In Figur 4 ist ein Teil eines Heizgerätes 14 dargestellt. Die wesentlichen Komponenten eines Heizgerätes sind dabei nicht gezeichnet. Innerhalb eines Gehäuses 66 ist ein Abgassammelkasten 68 erkennbar. Angedeutet ist ferner ein Rauchgasabzug 70. Im Abgassammelkasten 68 zieht das Abgas in Richtung auf den Rauchgasabzug 70. Dies ist durch den Pfeil 72 angedeutet. Im unteren Bereich (nicht dargestellt) sammelt sich ausgeschiedenes Kondensat, das von dort abgeführt wird.

Der Adapter 10 ist im Bereich einer Wand 74 des Abgassammelkastens 68 so montiert, dass sich der sensitive Fortsatz 22 innerhalb des Abgassammelkastens 68 befindet. Der montierte Sensor 12 reicht mit einem Meßfühler 76 (gestrichelt gezeichnet) bis in den unteren Bereich des Sacklochs 28 und somit in den sensitiven Bereich des Fortsatzes 22. Die genaue Ausführung hierzu hängt vom jeweilig verwendeten Sensor 12 ab. Im Ausführungsbeispiel wird die Temperatur des Abgases durch einen Wärmeübergang vom Abgas über die Oberfläche und das Material des Fortsatzes 22 auf den Meßfühler 76 übertragen. Der Messfühler 76 des Sensors 12 ist damit geschützt und indirekt mit dem Innenraum des Abgassammelkastens 68 verbunden.

Um den Adapter 10 zu montieren wird er in eine Öffnung 78 in der Wand 74 in einer Bewegung entlang des Pfeiles 80 eingeführt. Eine gewisse Elastizität der Öffnung 78 erlaubt es, zusammen mit den Anlaufschrägen 58 und 40, den Adapter 10 unter Kraft durch die Öffnung 78 zu führen so, dass die Wand im Bereich der zweiten Aufnahme zu liegen kommt. Ferner wurde im Vorfeld in der Nut 36 der zweiten Aufnahme 20 eine Dichtung 82 angeordnet, sodass nun die Öffnung 78 in der Wand 74 abgedichtet verschlossen ist.

Um die Öffnung 78 herum erstreckt sich ein Kragen 84 im wesentlichen senkrecht zur Wand 74. Der Kragen 84 hat eine Mehrkant Form, im Ausführungsbeispiel eine Sechskant Form an die sich das Kopfteil 24 mit seinem Sechskant 48 anlehnt. Dadurch ist der Adapter 10 verdrehsicher am Abgassammelkasten 68 befestigt. Um auch eine axiale Befestigung zu erzielen weist der Kragen 84 Rastelemente 86 auf, die sich nach einem Einrasten an der oberen Seite 26 anlehnen.

Durch diese Art der Verbindung zwischen der Wand 74 und dem Adapter 10 ist es möglich, auch einen komplexen Sensor 12 aus Metall durch eine einfache Schnappverbindung durch eine dünne Wand zu führen, die aus Metall oder auch aus Kunststoff gefertigt sein kann. Der Adapter 10 nimmt dabei die auftretenden Kräfte auf, bildet eine verlässliche Aufnahme für den Sensor 12 und überträgt die zu messenden Größen schnell, genau und ohne Beeinflussung.

Wird ausgehend von Sicherheitsvorschriften neben einem Temperatursensor 12 auch ein so genannter Temperaturlimiter notwendig, der bei bestimmten Temperaturverhältnissen zu einer Abschaltung des Heizgerätes 14 führt, so kann dieser durch einen zweiten Adapter 10 ausgeführt sein.

## Patentansprüche

1. Adapter (10) für einen Sensor (12) für ein Heizgerät (14), **gekennzeichnet durch** einen Körper (16), der eine erste Aufnahme (18) für einen Sensor (12) aufweist, der eine zweite Aufnahme (20) für ein Gehäuse (66) eines Heizgeräts (14) aufweist und der einen in das Heizgerät (14) einbringbaren sensitiven Fortsatz (22) aufweist.

2. Adapter (10) nach Anspruch 1, **dadurch gekennzeichnet, dass** die erste Aufnahme (18) ein Innengewinde (30) aufweist.

3. Adapter (10) nach einem der vorhergehenden Ansprüche, **dadurch gekennzeichnet, dass** die zweite Aufnahme (20) die Form einer umlaufenden Nut (36) aufweist.

4. Adapter (10) nach einem der vorhergehenden Ansprüche, **dadurch gekennzeichnet, dass** die zweite Aufnahme (20) eine Anlaufschräge (40) aufweist.

5. Adapter (10) nach einem der vorhergehenden Ansprüche, **dadurch gekennzeichnet, dass** die zweite Aufnahme (20) zumindest einseitig eine verstellbare Wand (60) aufweist.

6. Adapter (10) nach einem der vorhergehenden Ansprüche, **dadurch gekennzeichnet, dass** der sensitive Fortsatz (22) zylinderförmig ist.

7. Adapter (10) nach einem der vorhergehenden Ansprüche, **dadurch gekennzeichnet, dass** der Fortsatz (22) einen erweiterten Bereich (50) aufweist.

8. Adapter (10) nach einem der vorhergehenden Ansprüche, **gekennzeichnet durch**, einen Mehrkant (46), insbesondere einen Sechskant (48).

9. Sensor-Adapter-Einheit mit einem Sensor (12) und einem Adapter (10) nach einem der vorhergehenden Ansprüche, **dadurch gekennzeichnet, dass** der Sensor (12) mit einem sensitiven Bereich in die erste Aufnahme (18) des Adapters (10) einführbar, insbesondere eindrehbar ist.

10. Heizgerät mit einem Adapter (10) nach einem der Ansprüche 1 bis 8, **dadurch gekennzeichnet, dass** der Adapter (10) in einer Öffnung (78) einer Gehäusewand (74) befestigbar, insbesondere verdrehsicher befestigbar ist.
